# EUROPÄISCHE PATENTSCHRIFT

(11) **EP 2 910 319 B1**
(45) Veröffentlichungstag und Bekanntmachung des Hinweises auf die Patenterteilung: **30.11.2016**
(21) Anmeldenummer: 15000473.7
(22) Anmeldetag: 18.02.2015
(51) Int. Cl.: B60N 2/68, B60N 2/48, B21D 39/04

(54) **Tragvorrichtung**
Carrying device
Dispositif de support

(30) Priorität: 21.02.2014 DE 102014002233
(43) Veröffentlichungstag der Anmeldung: 26.08.2015
(73) Patentinhaber: GRAMMER AG, 92224 Amberg (DE)
(72) Erfinder: Winkelbach, Carsten, 53489 Sinzig (DE)
(74) Vertreter: Roche, von Westernhagen & Ehresmann

(56) Entgegenhaltungen:
- EP-A1- 2 017 121
- EP-B1- 2 281 644
- US-A1- 2002 157 235

## Beschreibung

Die Erfindung betrifft eine Tragvorrichtung für eine Kopfstütze.

Tragstangen werden zur Gewichtsreduzierung als Rohr gefertigt. Das Rohr wird z.B. aus einem Stahlband gefertigt, indem das Stahlband zu einem Rohr gewickelt und die aneinander liegenden Endbereiche des Blechs durch eine Längsnaht miteinander verschweißt werden. Außen wird die Schweißnaht bearbeitet, damit sie die Oberfläche des Rohres nicht überragt.

An Stellen, an denen das Tragrohr z.B. durch Rastkerben geschwächt ist oder an Stellen besonderer Belastung war es aus dem Stand der Technik bekannt, das Tragrohr mittels eines Verstärkungsrohres zu verstärken. Das Verstärkungsrohr ist z.B. lediglich in einem Bereich des Tragrohres ausgebildet. Eine solche Tragvorrichtung ist z.B. aus der EP 2 281 644 B1 bekannt.

Im Innenraum des Tragrohres ist die Nachbearbeitung der Schweißnaht nur mit hohem Aufwand möglich, deshalb wird der Überstand der Schweißnaht in dem Innenraum des Rohres meist nicht bearbeitet. Das hat aber den Nachteil, dass ein Verstärkungsrohr nicht ohne weiteres im Innenraum des Rohres angeordnet werden kann. Denn die Verstärkungsfunktion ist lediglich dann gewährleistet, wenn das Tragrohr Kräfte auf das Verstärkungsrohr übertragen kann.

In der EP 2 281 644 B1 ist ein Tragrohr offenbart, in welchem ein Verstärkungselement angeordnet ist. Das Problem der in den Innenraum des Tragrohres überstehenden Schweißnaht wird in dieser Druckschrift gelöst, indem das Verstärkungsrohr mit einem Längsschlitz versehen ist. Der Schlitz ist derart bemessen, dass die nach innen vorragende Schweißnaht in die durch den Schlitz gebildete Aussparung hineinragen kann. Diese Ausführung hat aber den Nachteil, dass die Festigkeit des Verstärkungsrohres durch den Schlitz gemindert ist, so dass die Verstärkungsfunktion durch das Innenrohr, nur in geringerem Umfang erfüllt werden kann.

In der DE 10 2010 008 925 A1 ist ein Tragrohr mit einem Verstärkungsrohr offenbart, wobei das Tragstangenrohr eine Schweißnaht mit einem inneren Überstand aufweist. Damit das Verstärkungsrohr montiert werden kann, weist es einen sechseckigen Querschnitt auf und liegt lediglich an den Ecken an dem Tragrohr an. Diese Ausführungsform weist den Nachteil auf, dass Kräfte zwischen dem Außenrohr und dem Innenrohr nicht so gut übertragen werden können. In der DE 10 2010 008 925 A1 wird deshalb vorgeschlagen, ein Medium in dem Zwischenraum zwischen dem Tragrohr und dem Verstärkungsrohr anzuordnen, womit Kräfte zwischen den Rohren übertragen werden können.

Der Erfindung liegt die Aufgabe zugrunde, ein Tragrohr mit einem Verstärkungsrohr zu schaffen, wobei durch die Verstärkung eine wesentlich höhere Festigkeit des Tragrohres erreicht wird und wobei Kräfte gut von dem Tragrohr auf das Verstärkungsrohr übertragen werden können.

Die Aufgabe wird gemäß einem ersten Aspekt gelöst durch eine Tragvorrichtung mit den Merkmalen des Anspruchs 1.

Die erfindungsgemäße Tragvorrichtung ist vorgesehen für eine Kopfstütze für Fahrzeugsitze in Land-, Luft- und Wasserfahrzeugen. An der Tragvorrichtung ist ein Kopfanlageteil befestigbar. Die Tragvorrichtung umfasst wenigstens einen freien Endbereich zur Lagerung der Tragvorrichtung in einer Lagervorrichtung, welche einem Fahrzeugsitz zugeordnet ist.

Die Tragvorrichtung kann im Sinne der Erfindung von einem Tragstangenbügel gebildet sein, welcher zwei freie Enden sowie eine Traverse umfasst. Alternativ kann auch wenigstens eine Einzelstange vorgesehen sein, die mit einem Endbereich in einem fahrzeugsitzfesten Lager gelagert werden kann und an deren anderem Endbereich ein Kopfanlageteil gehalten ist.

Die Tragvorrichtung kann z.B. durch den Zusammenbau verschiedener Tragrohre mittels Schweißen oder Pressen hergestellt sein. Alternativ oder zusätzlich kann die Tragvorrichtung z.B. durch den Zusammenbau von wenigstens einem Tragrohr und wenigstens einer Vollmaterialstange z.B. mittels Schweißen, Einstecken, Verpressen, erfolgen.

In dem Tragrohr ist wenigstens eine Hülse angeordnet, um zumindest einen Bereich des Tragrohres zu verstärken. Z.B. ist in einem Bereich des Tragrohres eine Hülse angeordnet. Gemäß einer alternativen Ausführung können in mehreren Bereichen des Tragrohres Hülsen angeordnet sein. Eine Hülse kann z.B. auch über die gesamte Länge des Tragrohres in dem Tragrohr angeordnet sein. Dabei steht eine Außenfläche der Hülse in einem ersten Umfangsteilbereich mit einer Innenfläche des Tragrohres in Kontakt.

Die Außenfläche der Hülse weist in einem zweiten Umfangsteilbereich einen Rücksprung auf, in welchen ein über die Innenfläche des Tragrohres vorstehender Vorsprung hineinragt. Dieser Vorsprung ist insbesondere durch eine Schweißnaht gebildet. Rücksprung bedeutet im Sinne der Erfindung, dass die Wand der Hülse in einem Bereich ihres Umfangs in Bezug auf die angrenzende Außenfläche oder in Bezug auf die Außenkontur der Hülse zurückversetzt ausgebildet ist. Das ist z.B. durch Materialabtrag oder durch eine Umformung der Wand möglich.

Der Außendurchmesser der Hülse weist z.B. in Bezug auf den Innendurchmesser des Rohres eine Spiel- oder Übergangspassung auf. Der Vorsprung kann z.B. mit dem Rücksprung oder mir der Außenfläche der Hülse eine Übermaßpassung bilden. Alternativ kann aber auch eine Spielpassung oder eine Übergangspassung zwischen dem Vorsprung und dem Rücksprung ausgebildet sein. Letzteres kann insbesondere dann der Fall sein, wenn die Hülse mit dem Tragrohr durch eine gemeinsame Umformung von Tragrohr und Hülse, wie z.B. Kerbe, formschlüssig und / oder passgenau verbunden ist. Auf diese Weise ist ein klapperfreier Sitz der Hülse in dem Tragrohr herstellbar.

Der Rücksprung ist z.B. über die gesamte Länge der Hülse ausgebildet. Gemäß einer alternativen Ausführung kann der Rücksprung z.B. auch in wenigstens einem Bereich der Längserstreckung der Hülse angeordnet sein. Das kann z.B. dann der Fall sein, wenn ein klapperfreier Sitz der Hülse gewünscht ist und dieser nicht durch andere im Verstärkungsbereich ausgebildeten Umformungen, wie z.B. Kerben, hergestellt wird. In diesem Fall wird das Rohr eingepresst, weil der Vorsprung des Tragrohrs in Bezug auf die Wand der Hülse in den Bereichen der Hülse, die nicht mit einem Rücksprung versehen sind, ein Übermaß aufweist. Auch wenn die Schweißnaht des Tragrohres ebenfalls nur in einem Bereich des Tragrohres ausgebildet ist, kann der Rücksprung lediglich bereichsweise ausgebildet sein. Die Hülse ist in einem Längsbereich, in welchem der Rücksprung ausgebildet ist, über den gesamten Umfang geschlossen.

Ist die Tragvorrichtung als Bügel ausgebildet, kann die Herstellung z.B. erfolgen, indem das Tragrohr zunächst derart gebogen wird, dass ein Bügel mit einer Traverse und freien Endbereichen entsteht. Anschließend wird in wenigstens einen freien Endbereich, insbesondere in beide freie Endbereiche, eine Hülse eingesteckt. Ggf. wird anschließend durch wenigstens einen Umformvorgang mindestens eine Umformung der Tragvorrichtung, wie z.B. Kerbe, erzeugt. Gemäß einem alternativen Verfahren kann die wenigstens eine Hülse auch in das ungebogene Tragrohr eingesteckt und ggf. die Umformung durchgeführt werden. das Biegen zu dem Bügel erfolgt bei diesem Verfahren im Anschluss.

Der Vorteil der erfindungsgemäßen Tragvorrichtung besteht unter anderem darin, dass hohe Kräfte von dem Tragrohr auf die Hülse übertragen werden können, da eine großflächige Anlage der Außenfläche der Hülse an der Innenfläche des Tragrohres erfolgt. Darüber hinaus wird die Hülse nicht durch einen Schlitz geschwächt. Die Herstellung der Hülse ist mit geringen Zusatzkosten verbunden.

Eine Ausgestaltung der Erfindung ist dadurch gekennzeichnet, dass der Rücksprung durch Umformung, insbesondere durch Sicken hergestellt ist. Bei dieser Ausführungsform ist der Rücksprung kostengünstig herstellbar, da die Sicke mit einem Sickwerkzeug während des Herstellungsprozesses in die Hülse eingeformt werden kann.

Eine alternative Ausführungsform ist dadurch gekennzeichnet, dass der Rücksprung durch materialabtragende Bearbeitung, wie z.B. Drehen, Fräsen, Räumen, Schleifen, hergestellt ist. Das hat z.B. den Vorteil, dass der Innenraum der Hülse bei der Herstellung des Rücksprungs nicht nach innen gewölbt wird.

Eine andere Ausführungsform ist dadurch gekennzeichnet, dass das Tragrohr im Bereich des Rücksprungs nach der Umformung oder dem Materialabtrag eine derart geringe Wandstärke aufweist, dass sich die an den Rücksprung angrenzenden Rohrbereiche elastisch relativ zueinander verformen lassen. Die an den Rücksprung angrenzenden Bereiche können unter Einfaltung der Wand der Hülse elastisch aufeinander zu bewegt werden. Das kann z.B. dadurch unterstützt werden, dass das Tragrohr in wenigstens einem Bereich seiner Längserstreckung mit einem Schlitz versehen ist.

Die Aufgabe wird gemäß einem zweiten Aspekt der Erfindung gelöst durch ein Verfahren mit den Merkmalen des Anspruchs 7.

Bei dem Verfahren zur Herstellung einer Tragvorrichtung für eine Kopfstütze, wird wenigstens eine Hülse bereitgestellt, deren Außendurchmesser etwa dem Innendurchmesser des Tragrohres entspricht. Die Hülse wird durch Umformung oder durch spanende Bearbeitung mit einem Rücksprung versehen und derart durch eine Öffnung des Tragrohres in einem Innenraum des Tragrohres angeordnet, dass ein über die Innenfläche vorstehender Vorsprung in den Rücksprung hineinragt und die Außenfläche der Hülse in dem ersten Umfangsteilbereich an der Innenfläche des Tragrohres anliegt.

Nach dem Anordnen der Hülse in dem Innenraum des Tragrohres können z.B. Rastkerben in die Tragvorrichtung eingeformt werden. Bei der Verformung werden z.B. sowohl das Tragrohr, als auch die Hülse verformt.

Vor oder nach dem Anordnen der Hülse in dem Innenraum des Tragrohres kann das Tragrohr z.B. in die gewünschte Form gebogen werden. Das Tragrohr kann z.B. mit wenigstens eine Abknickung oder einer kurvenförmigen Biegung versehen werden. Alternativ oder zusätzlich kann das Tragrohr zu einem Bügel mit einer Traverse und zwei Endbereichen gebogen werden.

Weitere Vorteile der Erfindung ergeben sich anhand der Beschreibung von in den Fig. dargestellten Ausführungsbeispielen. Die schematischen Fig. zeigen:
Fig. 1 ein als Bügel ausgebildetes Tragstangenrohr für eine Kopfstütze,
Fig. 2 eine Ansicht des Tragstangenbügels gemäß Ansichtspfeil II in Fig. 1,
Fig. 3 eine Schnittdarstellung gemäß Schnittlinie III - III in Fig. 1,
Fig. 4a eine Schnittdarstellung gemäß Schnittlinie IVa - IVa in Fig. 2,
Fig. 4b eine Schnittdarstellung gemäß Schnittlinie IVb - IVb in Fig. 3,
Fig. 5a bis 5h in Anlehnung an Fig. 3 unterschiedliche Querschnittgeometrien der zur Verstärkung eingesetzten Hülse,
Fig. 6 in Anlehnung an die Fig. 5a bis 5h eine Querschnittdarstellung einer weiteren Ausführungsform der Hülse,
Fig. 7 in Anlehnung an Fig. 6 ein Ausschnitt aus dem Querschnitt der Hülse, wobei an den Rücksprung angrenzende Bereiche der Wand der Hülse elastisch aufeinander zu bewegt sind,
Fig. 8 in Anlehnung an Fig. 7 der Ausschnitt, wobei die Hülse in das Tragrohr eingesetzt ist.

Eine Tragvorrichtung insgesamt wird in den Zeichnungen mit dem Bezugszeichen 10 bezeichnet. Gleiche Bezugszeichen in den unterschiedlichen Fig. bezeichnen entsprechende Teile, auch wenn kleine Buchstaben hinzugefügt oder weggelassen wurden.

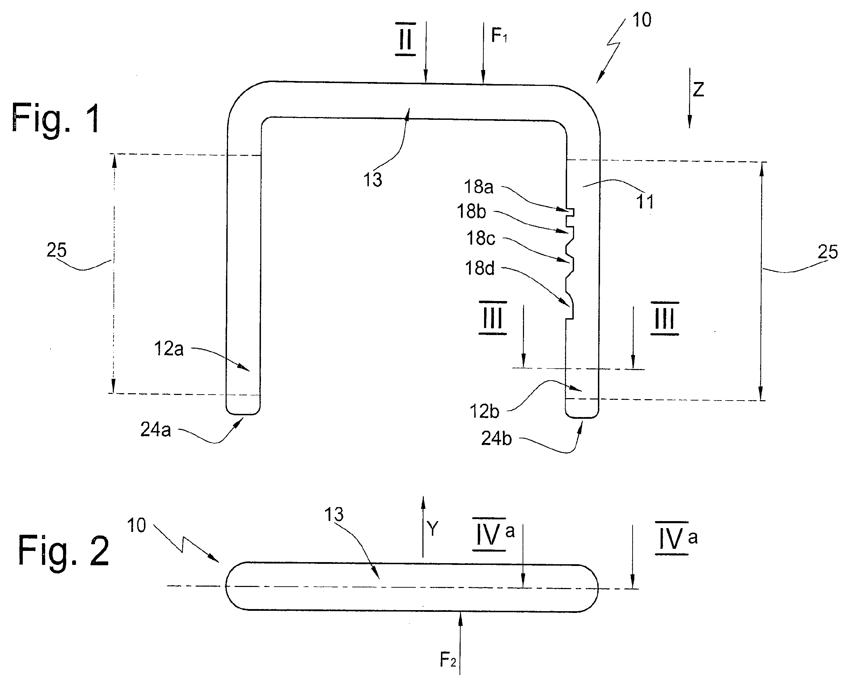

Die Tragvorrichtung 10 umfasst ein Tragrohr 11, welches im vorliegenden Ausführungsbeispiel als Bügel ausgebildet. Gemäß Fig. 1 ist eine Frontansicht des Tragrohres 11 dargestellt. An dem Bügel kann ein nicht dargestelltes Kopfanlageteil einer Kopfstütze befestigt werden. Gemäß einer alternativen Ausführung könnte das Tragstangenrohr auch als Stange ausgebildet sein, wobei das Kopfanlageteil an einem freien Ende gehalten ist und das andere freie Ende dazu vorgesehen ist, die Kopfstütze in einer Aufnahme der Rückenlehne eines Fahrzeugsitzes zu lagern.

Das Tragrohr 11 umfasst freie Endbereiche 12a und 12b, sowie eine Traverse 13. Die freien Endbereiche 12a und 12b können in einem rückenlehnenfesten Lager angeordnet werden. Rastkerben 18a, 18b, 18c und 18d, sind Teil einer Verriegelungsvorrichtung, mittels welcher das Tragstangenrohr 10 in unterschiedlichen Positionen relativ zu einem fahrzeugsitzfesten Lager lösbar verriegelbar ist.

Bei einer Fahrzeugkollision wirken durch den Aufprall des Kopfes des Sitzinsassen Kräfte F1 und F2 auf die Tragvorrichtung 10, die in Richtung z und in Richtung y wirken. Aus diesem Grund treten in bestimmten Bereichen der Tragvorrichtung 11 hohe Beanspruchungen auf. In einem Verstärkungsbereich 25 ist das Tragrohr 11 daher mit einer Verstärkung versehen.

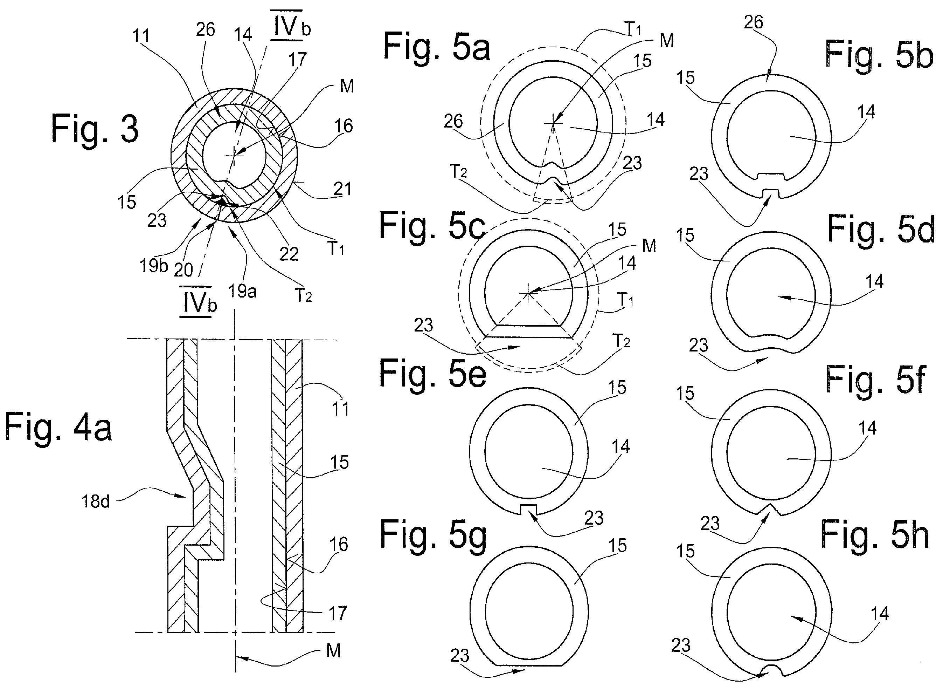

Mit III - III ist ein Schnitt durch den freien Endbereich 12b bezeichnet. Der Schnitt ist in Fig. 3 dargestellt. Es ist zu erkennen, dass in einem Innenraum 14 des Tragrohres 11 eine Hülse 15 zur Verstärkung koaxial zu dem Tragrohr 11 angeordnet ist. Die Hülse 15 und das Tragrohr 11 haben eine Längsmittellinie M. Die Hülse 15 hat eine Länge, die dem in Fig. 1 dargestellten Verstärkungsbereich 25 entspricht. Eine Außenfläche 16 der Hülse 15 liegt in einem ersten Umfangsteilbereich T1 der Hülse 15 an einer Innenfläche 17 des Tragrohres 11 an.

Das Tragrohr 11 ist aus einem Stahlband gefertigt, das Endbereiche 19 a und 19b aufweist. Die Endbereiche 19a und 19b sind mittels einer Schweißnaht 20 miteinander verschweißt. Die Außenfläche 21 des Tragrohres 11 wurde bearbeitet, so dass die Schweißnaht 20 die Außenfläche 21 nicht überragt. Da die Innenfläche 17 aber nur schwer zu bearbeiten ist, bildet die Schweißnaht 20 einen Vorsprung 22 in Bezug auf die Innenfläche 17. Die Außenfläche 16 der Hülse 15 weist in einem zweiten Umfangsteilbereich T2 einen Rücksprung 23 auf, in welchen der Vorsprung 22 hineinragt. Die Umfangsteilbereiche T1 und T2 sind z.B. anhand der in Fig. 5a dargestellten Hülse 15, die der Hülse 15 gemäß Fig. 3 entspricht, besser erkennbar. Der Umfangsteilbereich T1 ist durch eine gestrichelte Linie und der Umfangsteilbereich T2 durch eine gestrichelte Doppellinie dargestellt.

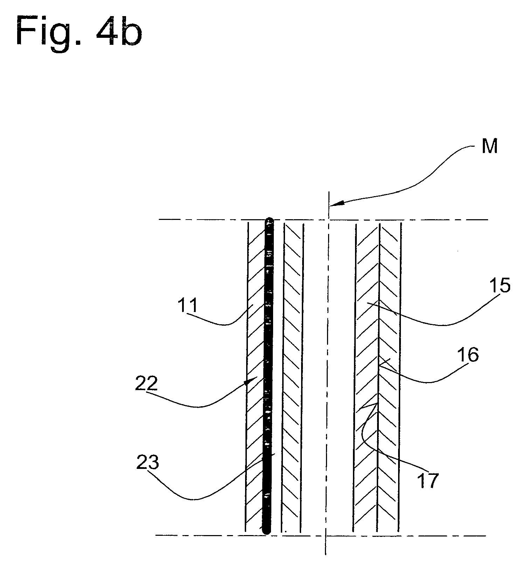

Der Rücksprung 23 kann z.B. über die gesamte Längserstreckung der Hülse 15 ausgebildet sein. Unterschiedliche Ausbildungen der Hülse 15 sind in den Fig. 5a bis 5h dargestellt, wobei der Rücksprung 23 bei den Hülsen 15 gemäß der Fig. 5a, 5b, 5c und 5d durch Umformen und gemäß der Fig. 5e, 5f, 5g und 5h durch materialabtragende Bearbeitung, wie Drehen, Fräsen, Räumen, Schleifen, erzeugt wurde. Alle Ausführungsformen der Hülse 15 gemäß der Fig. 5a bis 5h können die in den Fig. 3 und 4 gezeigte Hülse 15 bilden.

In Fig. 2 ist eine Draufsicht auf das Tragrohr 11 gemäß Ansichtspfeil II in Fig. 1 dargestellt. Mit IV - IV ist ein Längsschnitt bezeichnet, der in Fig. 4 dargestellt ist. In dem Längsschnitt ist lediglich ein Teilbereich des freien Endbereichs 12b gezeigt. Da die Kerben 18 a bis 18d erzeugt wurden, nachdem die Hülse 15 in dem Tragrohr 11 angeordnet wurde, liegt auch in dem Bereich der Kerben 18a bis 18d die Außenfläche 16 an der Innenfläche 17 formschlüssig und passgenau an.

Die Herstellung der Tragvorrichtung 10 erfolgt, wie nachfolgend beschrieben:

In die Hülse 15 wird durch Umformung oder Materialabtrag ein Rücksprung 23 eingearbeitet. Die Endbereiche 12a und 12b des Tragrohres 11 werden relativ zu der Traverse 13 gebogen, so dass ein Bügel entsteht. In jeden freien Endbereich 12a und 12b des Tragrohres 11 wird über eine Öffnung 24a bzw. 24b eine Hülse 15 in den Innenraum 14 eingeschoben bis die Hülse 15 in dem Verstärkungsbereich 25 angeordnet ist. Zuvor wird die Hülse 15 derart ausgerichtet, dass der Vorsprung 22 formschlüssig in den Rücksprung 23 greift. Anschließend werden die Kerben 18a, 18b, 18c und 18d in die Tragvorrichtung 10 mittels eines Umformwerkzeugs eingebracht.

Gemäß einem alternativen Verfahren, können die Endbereiche 12a und 12b des Tragrohres 11 relativ zu der Traverse 13 zu einem Bügel gebogen werden nachdem die Verfahrensschritte Einformen des Rücksprungs 23 in die Hülse 15, Einsetzen der Hülse 15 in den Verstärkungsbereich 25 des Tragrohres 11 und Einbringen der Kerben 18a bis 18d in das Tragrohr 11 durchgeführt wurden.

Bei beiden zuvor erwähnten Verfahrensalternativen kann der Verfahrensschritt Einbringen der Kerben 18 weggelassen werden.

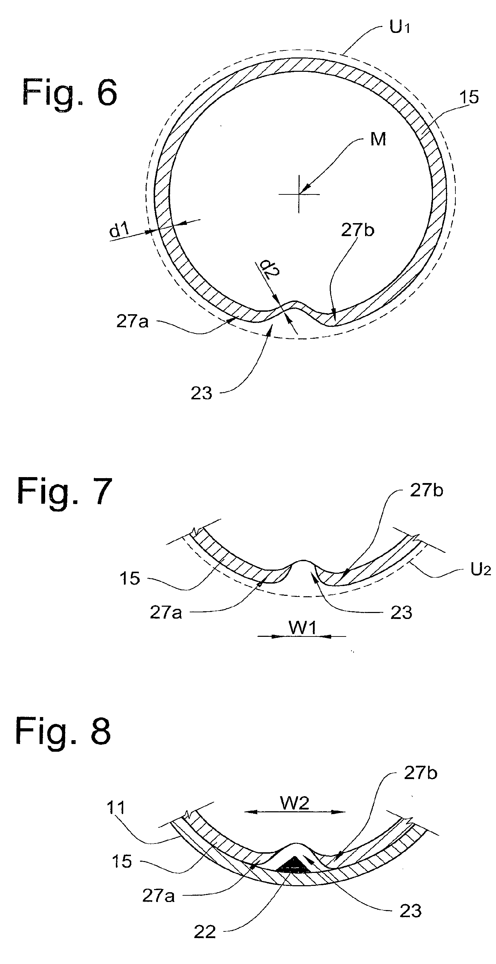

Ein anderes Ausführungsbeispiel ist in den Fig. 6 bis 8 gezeigt. Gemäß Fig. 6 weist die Hülse 15 einen Rücksprung 23 auf, wobei eine Wand 26 der Hülse 15 im Bereich des Rücksprungs 23 eine Dicke d2 hat. In dem nicht verformten Bereich weist die Wand 26 der Hülse 15 eine Dicke d1 auf. Die Dicke d2 ist geringer als die Dicke d1.

Beim Einführen der Hülse 15 in das Tragrohr 11 kann die Wand 26 unter Vorspannung elastisch verformt werden, derart, dass an den Rücksprung angrenzende Bereiche 27a und 27b der Wand 26 sich entsprechend dem Pfeilepaar w1 aufeinander zu bewegen, wobei der Umfang U1 der Hülse 15 (siehe Fig. 6) geringfügig zu dem Umfang U2 (siehe Fig. 7) verringert wird. Die Hülse 15 kann dann in das Tragrohr 11 eingesetzt und in dem Verstärkungsbereich 25 angeordnet werden, wobei der Vorsprung 22 in den Rücksprung 23 eingreift. Danach wird die Vorspannung aufgehoben, wobei sich die Bereiche 27a und 27b entsprechend dem Pfeilepaar w2 voneinander weg bewegen. Aufgrund der elastischen Rückstellkraft legt sich in dem ersten Umfangsteilbereich T1 die Hülse 15 mit ihrer Außenfläche 16 an die Innenfläche 17 unter Vorspannung an.

## Patentansprüche

1. Tragvorrichtung (10) für eine Kopfstütze mit einem Tragrohr (11), an welchem ein Kopfanlageteil befestigbar ist, mit wenigstens einem freien Endbereich (12a, 12b) zur Lagerung der Tragvorrichtung (10) in einer Lagervorrichtung, welche einem Fahrzeugsitz zugeordnet ist, wobei in dem Tragrohr (11) wenigstens eine Hülse (15) angeordnet ist, um zumindest einen Bereich (25) des Tragrohres (11) zu verstärken, **dadurch gekennzeichnet, dass** in einem ersten Umfangsteilbereich (T1) eine Außenfläche (16) der Hülse (15) mit einer Innenfläche (17) des Tragrohres (11) in Kontakt steht und dass in einem zweiten Umfangsteilbereich (T2) die Außenfläche (16) einen Rücksprung (23) aufweist, in welchen ein über die Innenfläche (17) vorstehender Vorsprung (22) hineinragt.

2. Tragvorrichtung nach Anspruch 1, **dadurch gekennzeichnet, dass** der Rücksprung (23) über die gesamte Länge der Hülse (15) ausgebildet ist.

3. Tragvorrichtung nach Anspruch 1, **dadurch gekennzeichnet, dass** der Rücksprung (23) in wenigstens einem Teilbereich der Hülse (15) ausgebildet ist.

4. Tragvorrichtung nach einem der vorangehenden Ansprüche, **dadurch gekennzeichnet, dass** der Rücksprung (23) durch Umformung, insbesondere durch Sicken hergestellt ist.

5. Tragvorrichtung nach einem der vorangehenden Ansprüche, **dadurch gekennzeichnet, dass** der Rücksprung (23) durch materialabtragende Bearbeitung, wie Drehen, Fräsen, Räumen, Schleifen, hergestellt ist.

6. Tragvorrichtung nach einem der vorangehenden Ansprüche, **dadurch gekennzeichnet, dass** die Dicke (d1) einer Wand (26) der unverformten Hülse (15) größer ist in Bezug auf die Dicke (d2) der Wand (26) im Bereich des Rücksprungs (23) und dass sich die Hülse (15) derart elastisch verformen lässt, dass sich unter Einfaltung des Rücksprungs (23) ein Umfang (U) der Hülse (15) verändert.

7. Verfahren zur Herstellung einer Tragvorrichtung (10) für eine Kopfstütze, wobei die Tragvorrichtung ein Tragrohr (11) umfasst, an welchem ein Kopfanlageteil befestigbar ist, welches wenigstens einen freien Endbereich (12a, 12b) aufweist zur Lagerung der Tragvorrichtung (10) in einer Lagervorrichtung eines Fahrzeugsitzes, **gekennzeichnet dadurch, dass**
wenigstens eine Hülse (15) bereitgestellt wird, deren Außendurchmesser etwa dem Innendurchmesser des Tragrohres (11) entspricht,
dass die Hülse (15) durch Umformung oder durch spanende Bearbeitung mit einem Rücksprung (23) versehen wird,
dass die Hülse (15) derart durch eine Öffnung (24a, 24b) des Tragrohres (11) in einem Innenraum (14) des Tragrohres (11) angeordnet wird, dass ein über die Innenfläche (17) vorstehender Vorsprung (22) in den Rücksprung (23) hineinragt.

8. Verfahren nach Anspruch 7, **dadurch gekennzeichnet, dass** nach dem Anordnen der Hülse (15) in dem Innenraum (14) des Tragrohres (11) wenigstens eine Umformung, wie Rastkerbe (18a, 18b, 18c, 18d), in die Tragvorrichtung (10) eingebracht wird.

9. Verfahren nach Anspruch 7 oder 8, **dadurch gekennzeichnet, dass** vor oder nach dem Verfahrensschritt des Anordnens der Hülse (15) in dem Innenraum (14) des Tragrohres (11) das Tragrohr (11) in eine beliebige Form gebogen wird.

## Claims

1. Support device (10) for a headrest comprising a support tube (11) to which a head support part can be attached, having at least one free end region (12a, 12b) for mounting the support device (10) in a bearing device provided on a vehicle seat, at least one sleeve (15) being disposed in the support tube (11) in order to reinforce at least one region (25) of the support tube (11), **characterised in that** an external surface (16) of the sleeve (15) sits in contact with an internal surface (17) of the support tube (11) in a first circumferential region (T1) and in a second circumferential region (T2) the external surface (16) has a recess (23) into which a projection (22) protruding from the internal surface (17) extends.

2. Support device as claimed in claim 1, **characterised in that** the recess (23) is disposed across the entire length of the sleeve (15).

3. Support device as claimed in claim 1, **characterised in that** the recess (23) is disposed in at least a part-region of the sleeve (15).

4. Support device as claimed in one of the preceding claims, **characterised in that** the recess (23) is produced by deformation, in particular by crimping.

5. Support device as claimed in one of the preceding claims, **characterised in that** the recess (23) is produced by machining involving the removal of material, such as turning, milling, broaching, grinding.

6. Support device as claimed in one of the preceding claims, **characterised in that** the thickness (d1) of a wall (26) of the non-deformed sleeve (15) is greater than the thickness (d2) of the wall (26) in the region of the recess (23) and the sleeve (15) can be elastically deformed such that a circumference (U) of the sleeve (15) changes as the recess (23) folds inwards.

7. Method of producing a support device (10) for a headrest, whereby the support device comprises a support tube (11) to which a head support part can be attached, having at least one free end region (12a, 12b) for mounting the support device (10) in a bearing device of a vehicle seat, **characterised in that**
at least one sleeve (15) is provided, the external diameter of which approximately corresponds to the internal diameter of the support tube (11),
the sleeve (15) is provided with a recess (23) by deformation or by machining to remove material,
the sleeve (15) is placed in an interior (14) of the support tube (11) through an opening (24a, 24b) of the support tube (11) such that a projection (22) protruding from the internal surface (17) extends into the recess (23).

8. Method as claimed in claim 7, **characterised in that** after placing the sleeve (15) in the interior (14) of the support tube (11), at least one deformation is made in the support device (10), such as a detent notch (18a, 18b, 18c, 18d).

9. Method as claimed in claim 7 or 8, **characterised in that** before or after the method step of placing the sleeve (15) in the interior (14) of the support tube (11), the support tube (11) is bent to any shape.

## Revendications

1. Dispositif de support (10) pour un appui-tête avec un tube support (11) au niveau duquel une partie de support de tête peut être fixée, avec au moins une extrémité libre (12a, 12b) pour positionner le dispositif de support (10) dans un dispositif de montage, lequel est associé à un siège d'automobile, au moins un manchon (15) étant disposé dans le tube support (11) pour renforcer au moins une zone (25) du tube support (11), **caractérisé en ce qu'**une surface extérieure (16) du manchon (15) est en contact avec une surface intérieure (17) du tube support (11) dans une première zone circonférentielle (T1) et **en ce que**, dans une deuxième zone circonférentielle (T2), la surface extérieure (16) présente un renfoncement (23) dans lequel une saillie (22) faisant saillie vers l'intérieur sur la surface intérieure (17) vient en prise.

2. Dispositif de support selon la revendication 1, **caractérisé en ce que** le renfoncement (23) est réalisé sur toute la longueur du manchon (15).

3. Dispositif de support selon la revendication 1, **caractérisé en ce que** le renfoncement (23) est réalisé dans au moins une zone partielle du manchon (15).

4. Dispositif de support selon l'une des précédentes revendications, **caractérisé en ce que** le renfoncement (23) est fabriqué par formage, en particulier par moulurage.

5. Dispositif de support selon l'une des précédentes revendications, **caractérisé en ce que** le renfoncement (23) est fabriqué par usinage avec enlèvement de matière, comme le tournage, le fraisage, le brochage, l'abrasion.

6. Dispositif de support selon l'une des précédentes revendications, **caractérisé en ce que** l'épaisseur (d1) d'une paroi (26) du manchon (15) formé est supérieure par rapport à l'épaisseur (d2) de la paroi (26) dans la zone du renfoncement (23) et **en ce que** le manchon (15) peut être déformé élastiquement de telle sorte qu'une circonférence (U) du manchon (15) est modifiée en pliant le renfoncement (23).

7. Procédé pour la fabrication d'un dispositif de support (10) pour un appui-tête, le dispositif de support comprenant un tube support (11) au niveau duquel une partie de support de tête peut être fixée, qui présente au moins une extrémité libre (12a, 12b) pour positionner le dispositif de support (10) dans un dispositif de montage, d'un siège d'automobile, **caractérisé en ce que** :
- au moins un manchon (15) est mis à disposition dont le diamètre extérieur correspond environ au diamètre intérieur du tube support (11),
- le manchon (15) est muni, par formage ou usinage par enlèvement, d'un renfoncement (23),
- le manchon (15) est disposé à travers une ouverture (24a, 24b) du tube support (11) dans un espace intérieur (14) du tube support (11), de telle sorte qu'une saillie (22) faisant saillie vers l'intérieur sur la surface intérieure (17) vient en prise dans le renforncement (23).

8. Procédé selon la revendication 7, **caractérisé en ce qu'**après disposition du manchon (15) dans l'espace intérieur (14) du tube support (11), au moins un formage comme une encoche de verrouillage (18a, 18b, 18c, 18d) est placé dans le dispositif de support (10).

9. Procédé selon la revendication 7 ou 8, **caractérisé en ce qu'**avant ou après l'étape du procédé, à savoir la disposition du manchon (15) dans l'espace intérieur (14) du tube support (11), le tube support (11) est plié dans n'importe quelle forme.
